(19) Europäisches Patentamt
European Patent Office
Office européen des brevets

(11) EP 2 284 111 B1

(12) **EUROPEAN PATENT SPECIFICATION**

(45) Date of publication and mention
of the grant of the patent:
**17.04.2013 Bulletin 2013/16**

(51) Int Cl.:
***B66B 7/06*** *(2006.01)*   ***D07B 1/06*** *(2006.01)*
***B66B 15/04*** *(2006.01)*

(21) Application number: **10185258.0**

(22) Date of filing: **23.08.1999**

(54) **Tension member for an elevator**

Spannungselement für einen Aufzug

Élément de tension pour ascenseur

(84) Designated Contracting States:
**DE ES FR IT PT**

(30) Priority: **22.12.1998 US 218990**
**26.03.1999 US 277496**

(43) Date of publication of application:
**16.02.2011 Bulletin 2011/07**

(62) Document number(s) of the earlier application(s) in
accordance with Art. 76 EPC:
**06003726.4 / 1 671 913**
**99973489.0 / 1 153 167**

(73) Proprietor: **Otis Elevator Company**
**Farmington**
**Connecticut 06032 (US)**

(72) Inventors:
• **Baranda, Pedro S.**
**28036 Madrid (ES)**
• **Mello, Ary O.**
**Farmington CT06032 (US)**
• **O'Donnell, Hugh J.**
**Longmeadow, MA 01106 (US)**

(74) Representative: **Klunker . Schmitt-Nilson . Hirsch**
**Patentanwälte**
**Destouchesstrasse 68**
**80796 München (DE)**

(56) References cited:
**JP-A- 9 021 084    US-A- 1 475 250**

## Description

The present invention relates to elevator systems, and more particularly to tension members for such elevator systems.

Subject-matter of the invention is a tension member, which is in engagement with a rotatable elevator system traction sheave, the tension member for providing lifting force to a car of the elevator system; wherein the tension member includes a plurality of spaced load carrying cords within a coating layer formed from a non-metallic material; and wherein the tension member has a ratio of width w relative to thickness t, greater than 1; characterized in that the cords are metallic and each formed of metallic strands in such a manner that the coating layer fills spaces between adjacent strands.

A tension member, which is in engagement with a rotatable sheave, wherein the tension member comprises the features indicated in the preceding paragraph before the words "characterized in that" (preamble of claim 1), is known from GB 2 162 283 A. The tension member is a "flat rope", which includes a plurality of spaced individual load carrying "ropes" in a coating layer formed of an elastomeric material. The material and the internal configuration of the individual ropes are not disclosed. The tension member is in engagement with a "rotor body" or "drum", and those elements are described in GB 2 162 283 A for a hoist in coal mines or gold mines (smallest individual rope and drum diameters described are about 11.1 cm and 91 cm, respectively).

In US 1 475 250 A an elevator system is disclosed, which comprises a belt-shaped tension member with a plurality of steel wire cables within a coating, the tension member being in engagement with a ring on a rotatable sheave and providing lifting force to an elevator car. Longitudinally extending wire cables and obliquely extending wire cables are interwoven, so that the spaces between the longitudinally extending wire cables are not completely filled by coating material.

JP 9 021084 A discloses a flat belt which comprises a plurality of force transmitting elements within a coating layer. The force transmitting elements abut each other and are formed of twisted wires. The flat belt is not disclosed for use in a traction elevator system in engagement with a rotatable traction drive sheave.

A conventional traction elevator system includes a car, a counterweight, two or more ropes interconnecting the car and counterweight, a traction sheave to move the ropes, and a machine to rotate the traction sheave. The ropes are formed from laid or twisted steel wire and the sheave is formed from cast iron. The machine may be either a geared or gearless machine. A geared machine permits the use of higher speed motor, which is more compact and less costly, but requires additional maintenance and space.

Although conventional round steel ropes and cast iron sheaves have proven very reliable and cost effective, there are limitations on their use. One such limitation is the traction forces between the ropes and the sheave. These traction forces may be enhanced by increasing the wrap angle of the ropes or by undercutting the grooves in the sheave. Both techniques reduce the durability of the ropes, however, as a result of the increased wear (wrap angle) or the increased rope pressure (undercutting). Another method to increase the traction forces is to use liners formed from a synthetic material in the grooves of the sheave. The liners increase the coefficient of friction between the ropes and sheave while at the same time minimizing the wear of the ropes and sheave.

Another limitation on the use of round steel ropes is the flexibility and fatigue characteristics of round steel wire ropes. Elevator safety codes today require that each steel rope have a minimum diameter d ($d_{min}$=8 mm for CEN; $d_{min}$=9.5 mm (3/8") for ANSI) and that the D/d ratio for traction elevators be greater than or equal to forty (D/d≥40), where D is the diameter of the sheave. This results in the diameter D for the sheave being at least 320 mm (380 mm for ANSI). The larger the sheave diameter D, the greater torque required from the machine to drive the elevator system.

With the development of high tensile strength, lightweight synthetic fibers has come the suggestion to replace steel wire ropes in elevator systems with ropes having load carrying strands formed from synthetic fibers, such as aramid fibers. Recent publications making this suggestion include: U.S. Patent No. 4,022,010, issued to Gladdenbeck et al.; U.S. Patent No. 4,624,097 issued to Wilcox; U.S. Patent No. 4,887,422 issued to Klees et al.; and U.S. Patent No. 5,566,786 issued to De Angelis et al. The cited benefits of replacing steel fibers with aramid fibers are the improved tensile strength to weight ratio and improved flexibility of the aramid materials, along with the possibility of enhanced traction between the synthetic material of the rope and the sheave.

Another drawback of conventional round ropes is that the higher the rope pressure, the shorter the life of the rope. Rope pressure ($P_{rope}$) is generated as the rope travels over the sheave and is directly proportional to the tension (F) in the rope and inversely proportional to the sheave diameter D and the rope diameter d ($P_{rope} \approx F/(Dd)$). In addition, the shape of the sheave grooves, including such traction enhancing techniques as undercutting the sheave grooves, further increases the maximum rope pressure to which the rope is subjected.

Even though the flexibility characteristic of such synthetic fiber ropes may be used to reduce the required D/d ratio, and thereby the sheave diameter D, the ropes will still be exposed to significant rope pressure. The inverse relationship between sheave diameter D and rope pressure limits the reduction in sheave diameter D that can be attained with conventional ropes formed from aramid fibers. In addition, aramid fibers, although they have high tensile strength, are more susceptible to failure when subjected to transverse loads. Even with reductions in the D/d requirement, the resulting rope pressure may cause undue damage to the aramid fibers and reduce the durability of the ropes.

The above art notwithstanding, scientists and engineers under the direction of Applicants' Assignee are working to develop more efficient and durable methods and apparatus to drive elevator systems.

According to the present invention, a tension member for an elevator has an aspect ratio of greater than one, where aspect ratio is defined as the ratio of tension member width w to thickness t (Aspect Ratio=w/t).

A principal feature of the present invention is the flatness of the tension member. The increase in aspect ratio results in a tension member that has an engagement surface, defined by the width dimension, that is optimized to distribute the rope pressure. Therefore, the maximum pressure is minimized within the tension member. In addition, by increasing the aspect ratio relative to a round rope, which has an aspect ratio equal to one, the thickness of the tension member may be reduced while maintaining a constant cross-sectional area of the tension member.

According further to the present invention, the tension member includes a plurality of individual load carrying cords encased within a common layer of coating. The coating layer separates the individual cords and defines an engagement surface for engaging a traction sheave.

As a result of the configuration of the tension member, the rope pressure may be distributed more uniformly throughout the tension member. As a result, the maximum rope pressure is significantly reduced as compared to a conventionally roped elevator having a similar load carrying capacity. Furthermore, the effective rope diameter 'd' (measured in the bending direction) is reduced for the equivalent load bearing capacity. Therefore, smaller values for the sheave diameter 'D' may be attained without a reduction in the D/d ratio. In addition, minimizing the diameter D of the sheave permits the use of less costly, more compact, high speed motors as the drive machine without the need for a gearbox.

In a particular embodiment of the present invention, the individual cords are formed from strands of non-metallic material, such as aramid fibers. By incorporating cords having the weight, strength, durability and, in particular, the flexibility characteristics of such materials into the tension member of the present invention, the acceptable traction sheave diameter may be further reduced while maintaining the maximum rope pressure within acceptable limits. As stated previously, smaller sheave diameters reduce the required torque of the machine driving the sheave and increase the rotational speed. Therefore, smaller and less costly machines may be used to drive the elevator system.

In another particular embodiment of the present invention, the individual cords are formed from strands of metallic material, such as steel. By incorporating cords having the flexibility characteristics of appropriately sized and constructed metallic materials into the tension member of the present invention, the acceptable traction sheave diameter may be minimized while maintaining the maximum rope pressure within acceptable limits.

The coating layer provides several advantages. First, the elastomeric coating layer provides for traction enhancement over the conventional steel ropes engaged with traction sheaves formed from cast iron or other metallic materials. Second, the coating layer seals the metallic cords to eliminate the need to continually apply and re-apply lubrication to the cords as is necessary in conventional steel ropes. Third, the coating layer fills the spaces between adjacent strands of the cords to avoid wire to wire contact. Such contact leads to fretting and degradation of the cords.

In addition, the coating layer provides a protective sheath around the load-carrying cords to prevent inadvertent damage from environmental factors, such as solvents or flame. This is particularly significant in the event of fire. For both non-metallic and metallic cords, the coating layer may be made from a flame retardant composition. The flame retardant coating layer will minimize the effects of fire the non-metallic cords, which may be sensitive to heat and fire. In addition, even though steel and other metallic cords are inherently flame retardant, having a flame retardant coating provides the additional benefit of avoiding a situation where loose burning coating layer material from the rope may cause peripheral damage within the hoistway. By making the coating layer flame retardant, the coating layer material is less likely to detach from the rope and less likely to cause peripheral damage.

As used herein, "flame retardant" means a material that is self extinguishing once the active flame is removed from the material. In a further particular embodiment of the present invention, a traction drive for an elevator system includes a tension member having an aspect ratio greater than one and a traction sheave having a traction surface configured to receive the tension member. The tension member includes an engagement surface defined by the width dimension of the tension member. The traction surface of the sheave and the engagement surface are complementarily contoured to provide traction and to guide the engagement between the tension member and the sheave. In an alternate configuration, the traction drive includes a plurality of tension members engaged with the sheave and the sheave includes a pair of rims disposed on opposite sides of the sheave and one or more dividers disposed between adjacent tension members. The pair of rims and dividers perform the function of guiding the tension member to prevent gross alignment problems in the event of slack rope conditions, etc.

In a still further embodiment, the traction surface of the sheave is defined by a material that optimizes the traction forces between the sheave and the tension member and minimizes the wear of the tension member. In one configuration, the traction surface is integral to a sheave liner that is disposed on the sheave. In another configuration, the traction surface is defined by a coating layer that is bonded to the traction sheave. In a still further configuration, the traction sheave is formed from the material that defines the traction surface.

Although described herein as primarily a traction device for use in an elevator application having a traction sheave, the tension member may be useful and have benefits in elevator applications that do not use a traction sheave to drive the tension member, such as indirectly roped elevator systems, linear motor driven elevator systems, or self-propelled elevators having a counterweight. In these applications, the reduced size of the sheave may be useful in order to reduce space requirements for the elevator system. The foregoing and other objects, features and advantages of the present invention become more apparent in light of the following detailed description of the exemplary embodiments thereof, as illustrated in the accompanying drawings.

Figure 1 is perspective view of an elevator system having a traction drive according to the present invention;
Figure 2 is a sectional, side view of the traction drive, showing a tension member and a sheave;
Figure 3 is a sectional, side view of an alternate embodiment showing a plurality of tension members;
Figure 4 is another alternate embodiment showing a traction sheave having a convex shape to center the tension member;
Figure 5 is a further alternate embodiment showing a traction sheave and tension member having complementary contours to enhance traction and to guide the engagement between the tension member and the sheave;

Figure 6 is a magnified cross sectional view of a single cord of an alternate embodiment of the invention having six strands twisted around a central stand;
Figure 7 is a magnified cross sectional view of another alternate embodiment of a single cord of the invention;
Figure 8 is a magnified cross sectional view of a still further alternate embodiment of the invention; and
Fig. 9 is a sectional view of the tension member.

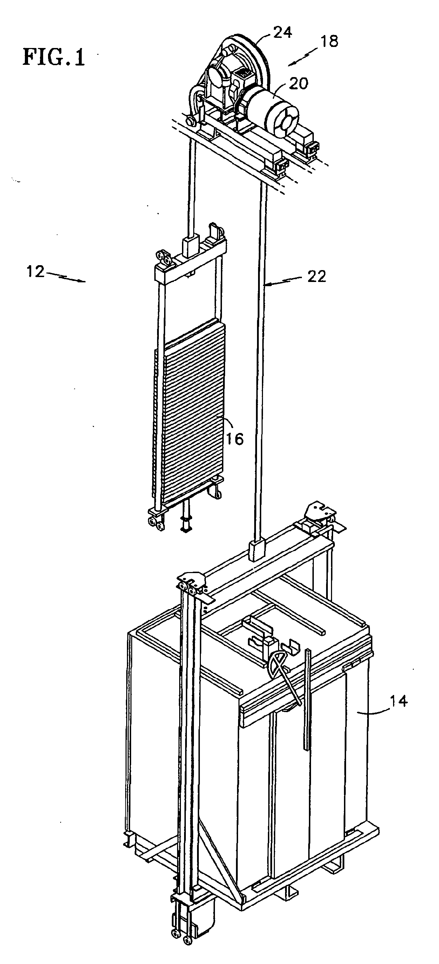

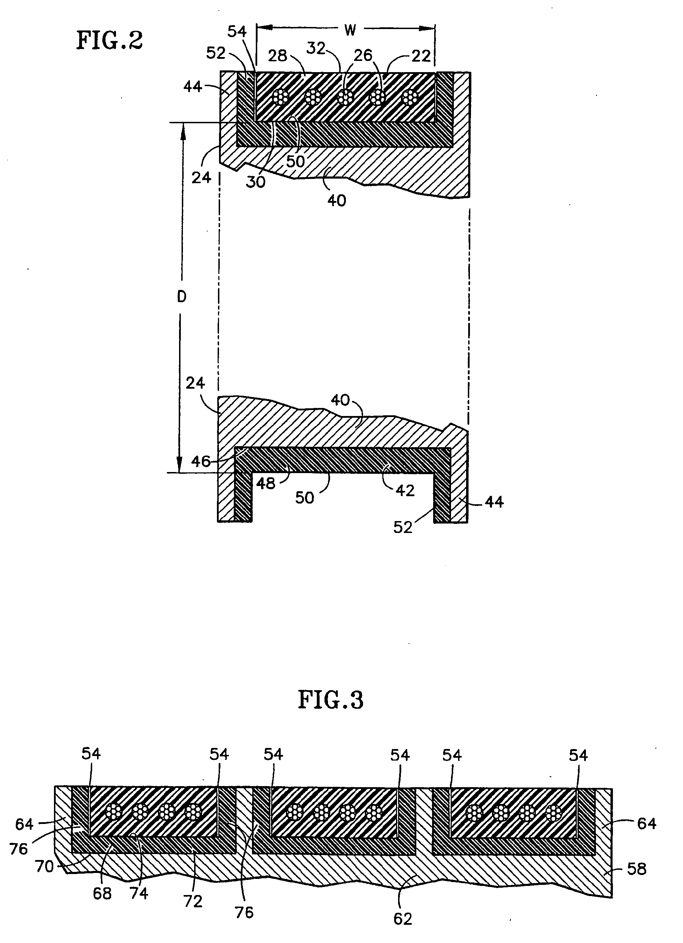

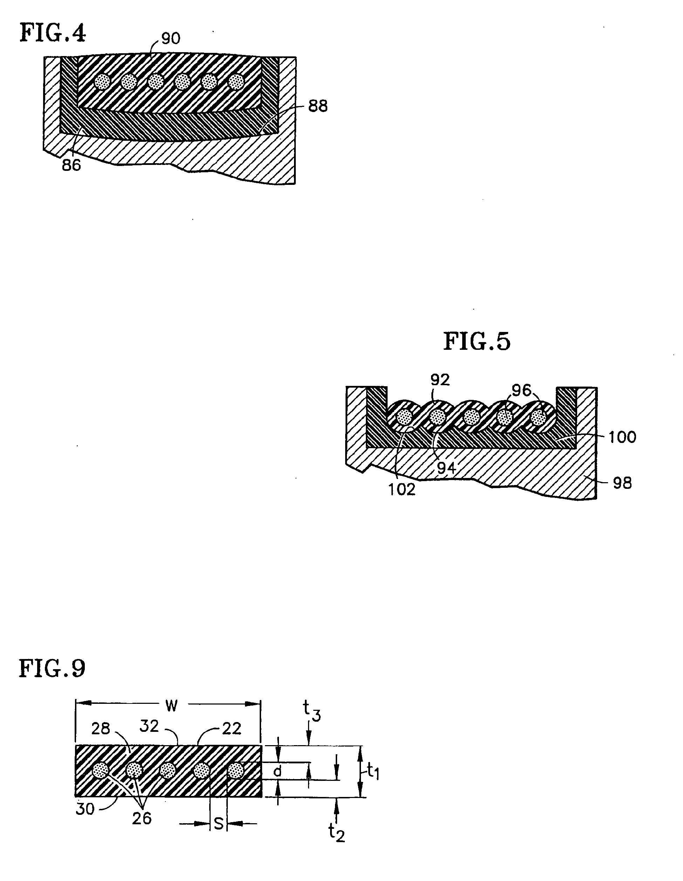

Illustrated in Figure 1 is a traction elevator system 12. The elevator system 12 includes a car 14, a counterweight 16, a traction drive 18, and a machine 20. The traction drive 18 includes a tension member 22, interconnecting the car 14 and counterweight 16, and a traction sheave 24. The tension member 22 is engaged with the sheave 24 such that rotation of the sheave 24 moves the tension member 22, and thereby the car 14 and counterweight 16. The machine 20 is engaged with the sheave 24 to rotate the sheave 24. Although shown as an geared machine 20, it should be noted that this configuration is for illustrative purposes only, and the present invention may be used with geared or gearless machines.
The tension member 22 and sheave 24 are illustrated in more detail in Figure 2. The tension member 22 is a single device that integrates a plurality of cords 26 within a common coating layer 28. Each of the ropes 26 is formed from laid or twisted strands of high strength synthetic, non-metallic fibers, such as commercially available aramid fibers. The cords 26 are equal length, are approximately equally spaced widthwise within the coating layer 28 and are arranged linearly along the width dimension. The coating layer 28 is formed from a polyurethane material, preferably a thermoplastic urethane, that is extruded onto and through the plurality of cords 26 in such a manner that each of the individual cords 26 is restrained against longitudinal movement relative to the other cords 26. Transparent material is an alternate embodiment which may be advantageous since it facilitates visual inspection of the flat rope. Structurally, of course, the color is irrelevant. Other materials may also be used for the coating layer 28 if they are sufficient to meet the required functions of the coating layer: traction, wear, transmission of traction loads to the cords 26 and resistance to environmental factors. It should further be understood that if other materials are used which do not meet or exceed the mechanical properties of a thermoplastic urethane, then the additional benefit of the invention of dramatically reducing sheave diameter may not be fully achievable. With the thermoplastic urethane mechanical properties the sheave diameter is reducible to 100 millimeters or less. The coating layer 28 defines an engagement surface 30 that is in contact with a corresponding surface of the traction sheave 24.
As shown more clearly in Figure 9, the tension member 22 has a width w, measured laterally relative to the length of the tension member 22, and a thickness t1, measured in the direction of bending of the tension member 22 about the sheave 24. Each of the cords 26 has a diameter d and are spaced apart by a distance s. In addition, the thickness of the coating layer 28 between the cords 26 and the engagement surface 30 is defined as t2 and between the cords 26 and the opposite surface is defined as t3, such that t1=t2+t3+d.
The overall dimensions of the tension member 22 results in a cross-section having an aspect ratio of much greater than one, where aspect ratio is defined as the ratio of width w to thickness t1 or (Aspect Ratio=w/t1). An aspect ratio of one corresponds to a circular cross-section, such as that common in conventional round ropes. The higher the aspect ratio, the more flat the tension member 22 is in cross-section. Flattening out the tension member 22 minimizes the thickness t1 and maximizes the width w of the tension member 22 without sacrificing cross-sectional area or load carrying capacity. This configuration results in distributing the rope pressure across the width of the tension member 22 and reduces the maximum rope pressure relative to a round rope of comparable cross-sectional area and load carrying capacity. As shown in Figure 2, for the tension member 22 having five individual cords 26 disposed within the coating layer 28, the aspect ratio is greater than five. Although shown as having an aspect ratio greater than five, it is believed that benefits will result from tension members having aspect ratios greater than one, and particularly for aspect ratios greater than two.

The separation s between adjacent cords 26 is dependant upon the materials and manufacturing processes used in the tension member 22 and the distribution of rope stress across the tension member 22. For weight considerations, it is desirable to minimize the spacing s between adjacent cords 26, thereby reducing the amount of coating material between the cords 26. Taking into account rope stress distribution, however, may limit how close the cords 26 may be to each other in order to avoid excessive stress in the coating layer 28 between adjacent cords 26. Based on these considerations, the spacing may be optimized for the particular load carrying requirements.

The thickness t2 of the coating layer 28 is dependant upon the rope stress distribution and the wear characteristics of the coating layer 28 material. As before, it is desirable to avoid excessive stress in the coating layer 28 while providing sufficient material to maximize the expected life of the tension member 22.

The thickness t3 of the coating layer 28 is dependant upon the use of the tension member 22. As illustrated in Figure 1, the tension member 22 travels over a single sheave 24 and therefore the top surface 32 does not engage the sheave 24. In this application, the thickness t3 may be very thin, although it must be sufficient to withstand the strain as the tension member 22 travels over the sheave 24. It may also be desirable to groove the tension member surface 32 to reduce tension in the thickness t3. On the other hand, a thickness t3 equivalent to that of t2 may be required if the tension member 22 is used in an elevator system that requires reverse bending of the tension member 22 about a second sheave. In this application, both the upper 32 and lower surface 30 of the tension member 22 is an engagement surface and subject to the same requirement of wear and stress.

The diameter d of the individual cords 26 and the number of cords 26 is dependent upon the specific application. It is desirable to maintain the thickness d as small as possible, as hereinbefore discussed, in order to maximize the flexibility and minimize the stress in the cords 26.

Although illustrated in Figure 2 as having a plurality of round ropes 26 embedded within the coating layer 28, other styles of individual ropes may be used with the tension member 22, including those that have aspect ratios greater than one, for reasons of cost, durability or ease of fabrication. Examples include oval shaped ropes, flat or rectangular shaped ropes, or a single flat rope distributed through the width of the tension member 22 An advantage of the embodiment having the single flat rope is that the distribution of rope pressure may be more uniform and therefore the maximum rope pressure within the tension member 22 may be less than in the other configurations. Since the ropes are encapsulated within a coating layer, and since the coating layer defines the engagement surface, the actual shape of the ropes is less significant for traction and may be optimized for other purposes.

In another preferred embodiment, each of the cords 26 is formed from preferably seven twisted strands, each made up of seven twisted metallic wires. In a preferred embodiment of this configuration of the invention, a high carbon steel is employed. The steel is preferably cold drawn and galvanized for the recognized properties of strength and corrosion resistance of such processes. The coating layer is preferably a polyurethane material that is ether based and includes a fire retardant composition. The flame retardant characteristic may be achieved by selecting a coating layer material that is inherently flame retardant or using an additive to the coating layer material to make it flame retardant. Examples of such additives include phosphoric esters, melamines and halogens.

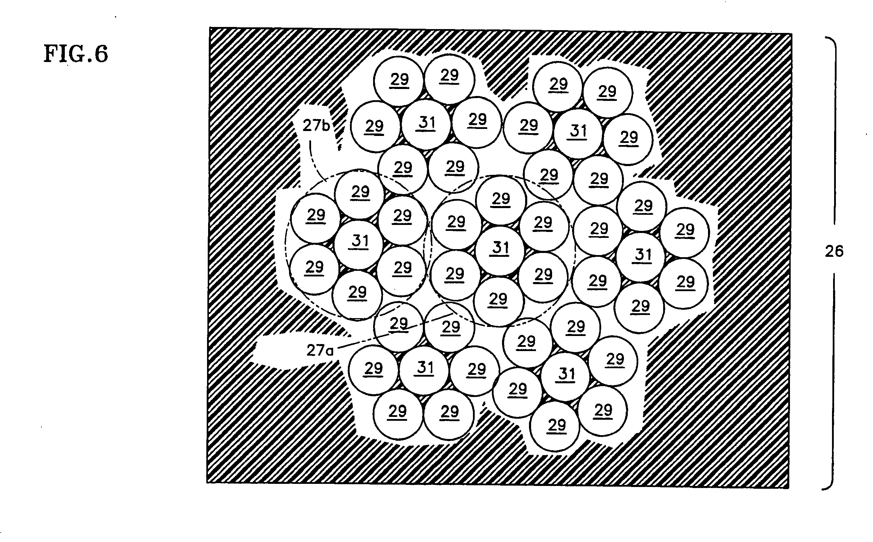

In a preferred embodiment incorporating steel cords, referring to Figure 6, each strand 27 of a cord 26 comprises seven wires with six of the wires 29 twisted around a center wire 31. Each cord 26, comprises one strand 27a which is centrally located and six additional outer strands 27b that are twisted around the central strand 27a. Preferably, the twisting pattern of the individual wires 29 that form the central strand 27a are twisted in one direction around central wire 31 of central strand 27a while the wires 29 of outer strands 27b are twisted around the central wire 31 of the outer strands 27b in the opposite direction. Outer strands 27b are twisted around central strand 27a in the same direction as the wires 29 are twisted around center wire 31 in strand 27a. For example, the individual strands in one embodiment comprise the central wire 31, in center strand 27a, with the six twisted wires 29 twisting clockwise; the wires 29 in the outer strands 27b twisting counterclockwise around their individual center wires 31 while at the cord 26 level the outer strands 27b twist around the central strand 27a in the clockwise direction. The directions of twisting improve the characteristics of load sharing in all of the wires of the cord.

It is important to the success of this embodiment of the invention to employ wire 29 of a very small size. Each wire 29 and 31 are less than .25 millimeters in diameter and preferably in the range of about 10 millimeters to .20 millimeters in diameter. In a particular embodiment, the wires are of a diameter of .175 millimeters in diameter. The small sizes of the wires preferably employed contribute to the benefit of the use of a sheave of smaller diameter. The smaller diameter wire can withstand the bending radius of a smaller diameter sheave (around 100 millimeters in diameter) without placing too much stress on the strands of the flat rope. Because of the incorporation of a plurality of small cords 26, preferably about 1.6 millimeters in total diameter in this particular embodiment of the invention, into the flat rope elastomer, the pressure on each cord is significantly diminished over prior art ropes. Cord pressure is decreased at least as $n^{-\frac{1}{2}}$ with n being the number of parallel cords in the flat rope, for a given load and wire cross section.

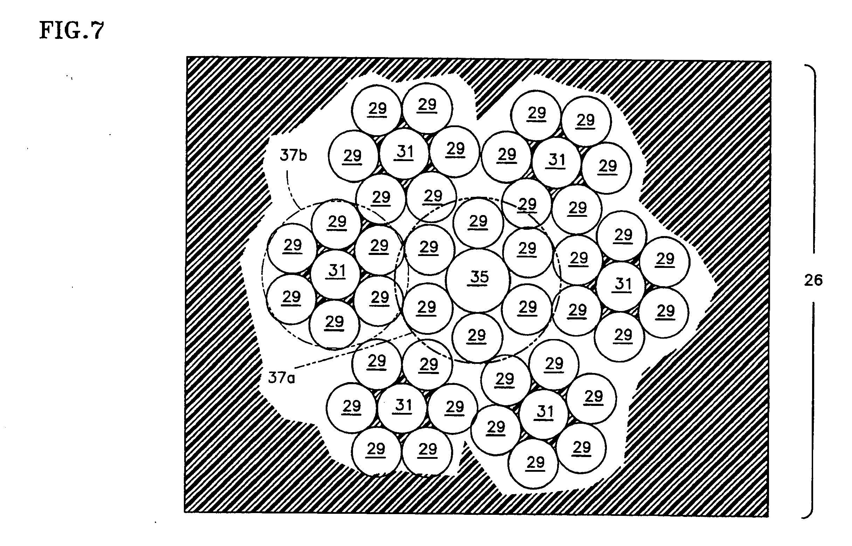

In an alternate embodiment of the configuration incorporating cords formed from metallic materials, referring to Figure 7, the center wire 35 of the center strand 37a of each cord 26 employs a larger diameter. For example, if the wires 29 of the previous embodiment (.175 millimeters) are employed, the center wire 35 of the center strand only of all cords would be about .20 to .22 millimeters in diameter. The effect of such a center wire diameter change is to reduce contact between wires 29 surrounding wire 35 as well as to reduce contact between strands 37b which are twisted around strand 37a. In such an embodiment the diameter of cord 26 will be slightly greater than the previous example of 1.6 millimeters.

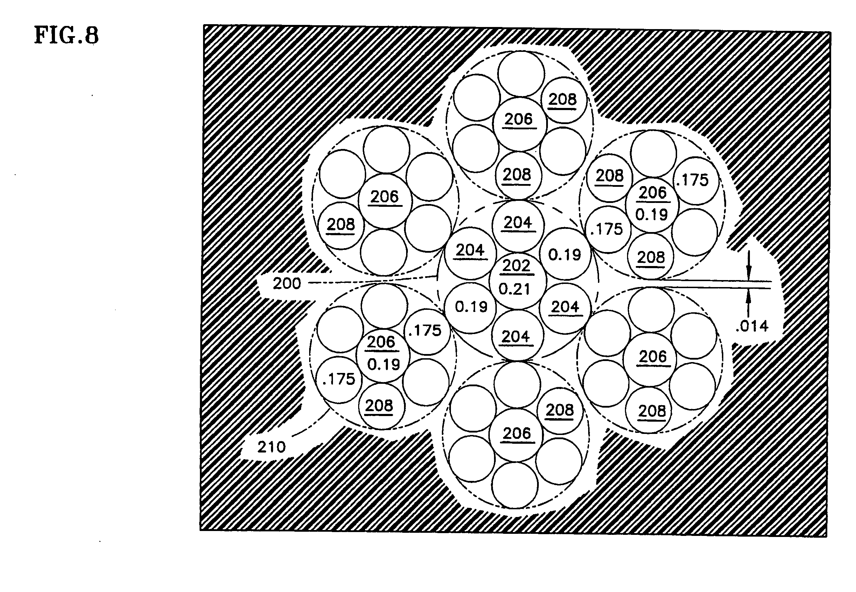

In a third embodiment of the configuration incorporating cords formed from metallic materials, referring to Figure 8, the concept of the embodiment of Figure 8 is expanded to further reduce wire-to-wire and strand-to-strand contact. Three distinct sizes of wires are employed to construct the cords of the invention. In this embodiment the largest wire is the center wire 202 in the center strand 200. The intermediate diameter wires 204 are located around the center wire 202 of center strand 200 and therefore makeup a part of center strand 200. This intermediate diameter wire 204 is also the center wire 206 for all outer strands 210. The smallest diameter wires employed are numbered 208. These wrap each wire 206 in each outer strand 210. All of the wires in the embodiment are still less than .25 mm in diameter. In a representative embodiment, wires 202 may be 0.21 mm; wires 204 may be 0.19 mm; wires 206 may be 0.19 mm; and wires 208 may be 0.175 mm. It will be appreciated that in this embodiment wires 204 and 206 are of equivalent diameters and are numbered individually to provide locational information only. It is noted that the invention is not limited by wires 204 and 206 being identical in diameter. All of the diameters of wires provided are for example only and could be rearranged with the joining principle being that contact among the outer wires of the central strand is reduced; that contact among the outer wires of the outer strands is reduced and that contact among the outer strands is reduced. In the example provided, (only for purpose of example) the space obtained between the outer wires of outer strands is .014 mm. It should be noted that the space between wires is filled with the coating layer material during the process of applying the coating layer to the cords. As a result, the coating layer contributes to the reduction of wire to wire contact.

Referring back to Figure 2, the traction sheave 24 includes a base 40 and a liner 42. The base 40 is formed from cast iron and includes a pair of rims 44 disposed on opposite sides of the sheave 24 to form a groove 46. The liner 42 includes a base 48 having a traction surface 50 and a pair of flanges 52 that are supported by the rims 44 of the sheave 24. The liner 42 is formed from a polyurethane material, such as that described in commonly owned US Patent No. 5,112,933. or any other suitable material providing the desired traction with the engagement surface 30 of the coating layer 28 and wear characteristics. Within the traction drive 18, it is desired that the sheave liner 42 wear rather than the sheave 24 or the tension member 22 due to the cost associated with replacing the tension member 22 or sheave 24. As such, the liner 42 performs the function of a sacrificial layer in the traction drive 18. The liner 42 is retained, either by bonding or any other conventional method, within the groove 46 and defines the traction surface 50 for receiving the tension member 22. The traction surface 50 has a diameter D. Engagement between the traction surface 50 and the engagement surface 30 provides the traction for driving the elevator system 12. The diameter of a sheave for use with the traction member described hereinabove is dramatically reduced from prior art sheave diameters. More particularly, sheaves to be employed with the flat rope of the invention may be reduced in diameter to 100 mm or less. As will be immediately recognized by those skilled in the art, such a diameter reduction of the sheave allows for the employment of a much smaller machine. In fact, machine sizes may fall to ¼ of their conventional size in for example low rise gearless applications for a typical 8 passenger duty elevators. This is because torque requirements would be cut to about ¼ with a 100 mm sheave and the rpm of the motor would be increased. Cost for the machines indicated accordingly falls.

Although illustrated as having a liner 42, it should be apparent to those skilled in the art that the tension member 22 may be used with a sheave not having a liner 42. As an alternative, the liner 42 may be replaced by coating the sheave with a layer of a selected material, such as polyurethane, or the sheave may be formed or molded from an appropriate synthetic material. These alternatives may prove cost effective if it is determined that, due to the diminished size of the sheave, it may be less expensive to simply replace the entire sheave rather than replacing sheave liners.

The shape of the sheave 24 and liner 42 defines a space 54 into which the tension member 22 is received. The rims 44 and the flanges 52 of the liner 42 provide a boundary on the engagement between the tension member 22 and the sheave 24 and guide the engagement to avoid the tension member 22 becoming disengaged from the sheave 24.

An alternate embodiment of the traction drive 18 is illustrated in Figure 3. In this embodiment, the traction drive 18 includes three tension members 56 and a traction sheave 58. Each of the tension members 56 is similar in configuration to the tension member 22 described above with respect to Figures 1 and 2. The traction sheave 58 includes a base 62, a pair of rims 64 disposed on opposite side of the sheave 58, a pair of dividers 66, and three liners 68. The dividers 66 are laterally spaced from the rims 64 and from each other to define three grooves 70 that receive the liners 68. As with the liner 42 described with respect to Figure 2, each liner 68 includes a base 72 that defines a traction surface 74 to receive one of the tension members 56 and a pair of flanges 76 that abut the rims 64 or dividers 66. Also as in Figure 2, the liner 42 is wide enough to allow a space 54 to exist between the edges of the tension member and the flanges 76 of the liner 42.

Alternative construction for the traction drive 18 are illustrated in Figures 4 and 5. Figure 4 illustrates a sheave 86 having a convex shaped traction surface 88. The shape of the traction surface 88 urges the flat tension member 90 to remain centered during operation. Figure 5 illustrates a tension member 92 having a contoured engagement surface 94 that is defined by the encapsulated cords 96. The traction sheave 98 includes a liner 100 that has a traction surface 102 that is contoured to complement the contour of the tension member 92. The complementary configuration provides guidance to the tension member 92 during engagement and, in addition, increases the traction forces between the tension member 92 and the traction sheave 98.

Use of tension members and traction drives according to the present invention may result in significant reductions in maximum rope pressure, with corresponding reductions in sheave diameter and torque requirements. The reduction in maximum rope pressure results from the cross-sectional area of the tension member having an aspect ratio of greater than one. For this configuration, assuming that the tension member has a single flat load carrying rope, the calculation for approximate maximum rope pressure is determined as follows:

$$P_{max} \cong (2F/Dw)$$

Where F is the maximum tension in the tension member. For the other configurations having a plurality of load carrying ropes, the maximum rope pressure would be approximately the same although slightly higher due to the discreteness of the individual ropes. For a round rope within a round groove, the calculation of maximum rope pressure is determined as follows:

$$P_{max} \cong (2F/Dd)(4/\pi)$$

The factor of $(4/\pi)$ results in an increase of at least 27% in maximum rope pressure, assuming that the diameters and tension levels are comparable. More significantly, the width w is much larger than the cord diameter d, which results in greatly reduced maximum rope pressure. If the conventional rope grooves are undercut, the maximum rope pressure is even greater and therefore greater relative reductions in the maximum rope pressure may be achieved using a flat tension member configuration. Another advantage of the tension member according to the present invention is that the thickness t1 of the tension member may be much smaller than the diameter d of equivalent load carrying capacity round ropes. This enhances the flexibility of the tension member as compared to conventional ropes.

Although the invention has been shown and described with respect to exemplary embodiments thereof, it should be understood by those skilled in the art that various changes, omissions, and additions may be made thereto.

The present patent specification further discloses a tension member for providing lifting force to a car of an elevator system, the tension member being engageable with a rotatable sheave of the elevator system, the tension member having a load carrying cord encased within a coating layer, wherein the load carrying cord is formed from a metallic material and the coating layer is formed from a non-metallic material. This tension member may further include a plurality of spaced metallic cords, wherein the coating layer encapsulates the plurality of spaced metallic cords; or a flame retardant coating layer; or the feature that each cord is formed from a plurality of wires in a manner to produce spaces between adjacent wires, and wherein the coating layer fills the spaces.

The present patent specification further discloses a tension member for providing lifting force to a car of an elevator system, the tension member having a width w, a thickness t measured in the bending direction, and an engagement surface defined by the width dimension of the tension member, wherein the tension member has a aspect ratio, defined as the ratio of width w relative to thickness t, greater than one, the tension member including a plurality of individual load carrying cords encased within a common layer of coating, and wherein the coating layer is flame retardant.

## Claims

1. A tension member (22), which is in engagement with a rotatable elevator system traction sheave (24), the tension member (22) for providing lifting force to a car (14) of the elevator system (12); wherein the tension member (22) includes a plurality of spaced load carrying cords (26) within a coating layer (28) formed from a non-metallic material; and
wherein the tension member (22) has a ratio of width w relative to thickness t, greater than 1;
**characterized in that** the cords (26) are metallic and each formed of metallic strands (27a; 276; 37a; 37b; 200; 210) in such a manner that the coating layer (28) fills spaces between adjacent strands (27).

2. The tension member (22), which is in engagement with the rotatable elevator system traction sheave (24), according to claim 1,
wherein the strands (27a; 27b; 37a; 37b; 200; 210) each are formed of metal wires.

3. The tension member (22), which is in engagement with the rotatable elevator system traction sheave (24), according to claim 2,
wherein the metal wires are less than 0.25 mm in diameter, preferably in the range of about 0.10 to 0.20 mm in diameter.

4. The tension member (22), which is in engagement with the rotatable elevator system traction sheave (24), according to any of claims 1 to 3,
wherein the sheave (24) diameter is 100 mm or less.

5. The tension member (22), which is in engagement with the rotatable elevator system traction sheave (24), according to any of claims 1 to 4,
wherein the cord (26) diameter is smaller than the sheave (24) diameter divided by 40.

6. The tension member (22), which is in engagement with the rotatable elevator system traction sheave (24), according to any of claims 2 to 5,
wherein the metal wires are 0.22 mm or less in diameter.

7. The tension member (22), which is in engagement with the rotatable elevator system traction sheave (24), according to any of claims 1 to 6,
wherein each cord (26) is formed from a plurality of wires in a manner to produce spaces between adjacent wires, and wherein the coating layer (28) fills the spaces.

8. The tension member (22), which is in engagement with the rotatable elevator system traction sheave (24), according to any of claims 1 to 7,
wherein the cords (26) each are formed of a central strand (27a; 37a; 200) and six outer strands (27b; 37b; 310) twisted around the central strand.

9. The tension member (22), which is in engagement with the rotatable elevator system traction sheave (24), according to any of claims 1 to 8,
wherein the strands (27a; 27b; 37a; 37b; 200; 210) each are formed of a central wire (31; 35; 202; 206) and six wires (29; 204; 208) twisted around the central wire.

10. The tension member (22), which is in engagement with the rotatable elevator system traction sheave (24), according to any of claims 2 to 9,
wherein the cords (26) each have the following twisting pattern:

- in a central strand (27a; 37b; 200), the wires are twisted around a central wire in a first direction;
- in each of outer strands (27b; 37b; 210) twisted around the central strand, the wires are twisted around a central wire in a second, opposite direction;
- the outer strands are twisted around the central strand in the first direction.

11. The tension member (22), which is in engagement with the rotatable elevator system traction sheave (24), according to any of claims 1 to 10,
wherein the coating layer (28) is elastomeric, preferably formed from a polyurethane material.

12. The tension member (22), which is in engagement with the rotatable elevator system traction sheave (24), according to any of claims 1 to 11,
wherein the coating layer (28) is flame retardant.

13. The tension member (22), which is in engagement with the rotatable elevator system traction sheave (24), according to any of claims 1 to 12,
wherein the traction surface (50; 74; 102) of the traction sheave (24) is made of a material that optimizes the traction forces between the traction sheave (24) and the tension member (22) and minimizes the wear of the tension member, and wherein such traction surface is provided either by a coating layer bonded to the traction sheave, or by a sheave liner (42; 68) disposed on the traction sheave, or by a material from which the traction sheave is formed.

14. The tension member (22), which is in engagement with the rotatable elevator system traction sheave (24), according to any of claims 1 to 13,
wherein the traction sheave (24) comprises a circumferential channel that guides the tension member (22).

15. The tension member (22), which is in engagement with the rotatable elevator system traction sheave (24), according to any of claims 1 to 14,
wherein multiple tension members (22), side by side, are in engagement with the traction sheave (24).

16. The tension member (22), which is in engagement with the rotatable elevator system traction sheave (24), according to any of claims 1 to 15,
wherein the traction sheave (24) has a curved traction surface, when viewed in an axial cross-section.

17. The tension member (22), which is in engagement with the rotatable elevator system traction sheave (24), according to any of claims 1 to 15,
wherein the tension member (22) has a contoured engagement surface (94) with multiple embossments extending in lengthwise direction of the tension member, and wherein the traction sheave (24) has a traction surface (102) that is contoured in a complementary configuration.

18. The tension member (22), which is in engagement with the rotatable elevator system traction sheave (24), according to any of claims 1 to 17, wherein each cord (26) is formed from a plurality of wires in a manner to produce spaces between adjacent wires, and wherein the coating layer (28) fills the spaces; wherein the sheave (24) diameter is 100 mm or less; and wherein the cord (26) diameter is smaller than the sheave (24) diameter divided by 40.

19. An elevator system (12), comprising a tension member (22), as indicated in any of claims 1 to 18, for providing lifting force to a car (14), the tension member (22) being in engagement with a rotatable traction sheave (24), as indicated in any of claims 1 to 18.

20. The elevator system according to claim 19, comprising a gearless machine to rotate the traction sheave (24).

21. The elevator system according to claim 19 or 20 wherein the tension member (22) is a member which suspends the car (14) and a counterweight (16) and provides lifting force to the car.

## Patentansprüche

1. Zugelement (22), das mit einer drehbaren Aufzugsystem-Traktionsscheibe (24) zusammenwirkt, wobei das Zugelement (22) zum Bereitstellen von Hebekraft für einen Fahrkorb (14) des Aufzugsystems (12) ausgebildet ist; wobei das Zugelement (22) eine Mehrzahl voneinander beabstandeter, lasttragender Stränge (26) innerhalb einer Umhüllungsschicht (28) aufweist, die aus einem nicht-metallischen Material gebildet ist; und wobei das Zugelement (22) ein Verhältnis der Breite w relativ zu der Dicke t von größer als 1 aufweist; **dadurch gekennzeichnet, dass** die Stränge (26) metallisch sind und jeder derselben aus metallischen Litzen (27a, 27b; 37a, 37b; 200, 210) derart gebildet ist, dass die Umhüllungsschicht (28) Räume zwischen benachbarten Litzen (27) ausfüllt.

2. Zugelement (22), das mit der drehbaren Aufzugsystem-Traktionsscheibe (24) zusammenwirkt, nach Anspruch 1, wobei die Litzen (27a, 27b; 37a, 37b; 200; 210) jeweils aus Metalldrähten gebildet sind.

3. Zugelement (22), das mit der drehbaren Aufzugsystem-Traktionsscheibe (24) zusammenwirkt, nach Anspruch 2, wobei die Metalldrähte einen Durchmesser von weniger als 0,25 mm, vorzugsweise einen Durchmesser im Bereich von ca. 0,10 bis 0,20 mm aufweisen.

4. Zugelement (22), das mit der drehbaren Aufzugsystem-Traktionsscheibe (24) zusammenwirkt, nach einem der Ansprüche 1 bis 3, wobei der Durchmesser der Scheibe (24) 100 mm oder weniger beträgt.

5. Zugelement (22), das mit der drehbaren Aufzugsystem-Traktionsscheibe (24) zusammenwirkt, nach einem der Ansprüche 1 bis 4, wobei der Durchmesser des Strangs kleiner ist als der Durchmesser der Scheibe (24) dividiert durch 40.

6. Zugelement (22), das mit der drehbaren Aufzugsystem-Traktionsscheibe (24) zusammenwirkt, nach einem der Ansprüche 2 bis 5, wobei die Metalldrähte einen Durchmesser von 0,22 mm oder weniger aufweisen.

7. Zugelement (22), das mit der drehbaren Aufzugsystem-Traktionsscheibe (24) zusammenwirkt, nach einem der Ansprüche 1 bis 6, wobei jeder Strang (26) aus einer Mehrzahl von Drähten derart gebildet ist, dass zwischen benachbarten Drähten Räume entstehen, und wobei die Umhüllungsschicht (28) die Räume ausfüllt.

8. Zugelement (22), das mit der drehbaren Aufzugsystem-Traktionsscheibe (24) zusammenwirkt, nach einem der Ansprüche 1 bis 7, wobei die Stränge (26) jeweils aus einer zentralen Litze (27a; 37a; 200) und sechs äußeren Litzen (27b; 37b; 200) gebildet sind, die um die zentrale Litze herumgedrillt sind.

9. Zugelement (22), das mit der drehbaren Aufzugsystem-Traktionsscheibe (24) zusammenwirkt, nach einem der Ansprüche 1 bis 8, wobei die Litzen (27a; 27b; 37a; 37b; 200; 210) jeweils aus einem zentralen Draht (31; 35; 202; 206) sowie sechs um den zentralen Draht herumgedrillten Drähten (29; 204; 208) gebildet sind.

10. Zugelement (22), das mit der drehbaren Aufzugsystem-Traktionsscheibe (24) zusammenwirkt, nach einem der Ansprüche 3 bis 9, wobei die Stränge (26) jeweils folgendes Verdrillungsmuster aufweisen:

- in einer zentralen Litze (27a; 37b; 200) sind die Drähte in einer ersten Richtung um einen zentralen Draht herumgedrillt;
- in den um die zentrale Litze herumgedrillten äußeren Litzen (27b; 37b; 200) sind die Drähte jeweils in einer zweiten, entgegengesetzten Richtung um einen zentralen Draht herumgedrillt;
- die äußeren Litzen sind in der ersten Richtung um die zentrale Litze herumgedrillt.

11. Zugelement (22), das mit der drehbaren Aufzugsystem-Traktionsscheibe (24) zusammenwirkt, nach einem der Ansprüche 1 bis 10, wobei die Umhüllungsschicht (28) elastomer ist und vorzugsweise aus einem Polyurethanmaterial gebildet ist.

12. Zugelement (22), das mit der drehbaren Aufzugsystem-Traktionsscheibe (24) zusammenwirkt, nach einem der Ansprüche 1 bis 11, wobei die Umhüllungsschicht (28) flammhemmend ist.

13. Zugelement (22), das mit der drehbaren Aufzugsystem-Traktionsscheibe (24) zusammenwirkt, nach einem der Ansprüche 1 bis 12, wobei die Traktionsfläche (50; 74; 102) der Traktionsscheibe (24) auf einem Material hergestellt ist, das die Traktionskräfte zwischen der Traktionsscheibe (24) und dem Zugelement (22) optimiert und den Verschleiß des Zugelements minimiert, und wobei eine derartige Traktionsfläche geschaffen ist entweder durch eine mit der Traktionsscheibe verbundene Beschichtungsschicht oder durch einen auf der Traktionsscheibe angeordneten Scheibenbelag (42; 68) oder durch ein Material, aus dem die Traktionsscheibe gebildet ist.

14. Zugelement (22), das mit der drehbaren Aufzugsystem-Traktionsscheibe (24) zusammenwirkt, nach einem der Ansprüche 1 bis 13, wobei die Traktionsscheibe (24) einen in Umfangsrichtung verlaufenden Kanal aufweist, der das Zugelement (22) führt.

15. Zugelement (22), das mit der drehbaren Aufzugsystem-Traktionsscheibe (24) zusammenwirkt, nach einem der Ansprüche 1 bis 14, wobei mehrere Zugelemente (22) nebeneinander mit der Traktionsscheibe (24) zusammenwirken.

16. Zugelement (22), das mit der drehbaren Aufzugsystem-Traktionsscheibe (24) zusammenwirkt, nach einem der Ansprüche 1 bis 15, wobei die Traktionsscheibe (24) bei Betrachtung im Axialschnitt eine gekrümmte Traktionsfläche aufweist.

17. Zugelement (22), das mit der drehbaren Aufzugsystem-Traktionsscheibe (24) zusammenwirkt, nach einem der Ansprüche 1 bis 15, wobei das Zugelement (22) eine konturierte Eingriffsfläche (94) mit mehreren Erhebungen aufweist, die sich in Längsrichtung des Zugelements erstrecken, und wobei die Traktionsscheibe (24) eine Traktionsfläche (102) aufweist, die in einer komplementären Konfiguration konturiert ist.

18. Zugelement (22), das mit der drehbaren Aufzugsystem-Traktionsscheibe (24) zusammenwirkt, nach einem der Ansprüche 1 bis 17, wobei die Stränge (26) jeweils aus einer Mehrzahl von Drähten derart gebildet ist, dass zwischen einander benachbarten Drähten Räume entstehen, und wobei die Umhüllungsschicht (26) die Räume ausfüllt; wobei der Durchmesser der Scheibe (24) 100 mm oder weniger beträgt; und wobei der Durchmesser des Strangs (26) kleiner ist als der Durchmesser der Scheibe (24) dividiert durch 40.

19. Aufzugsystem (12) mit einem Zugelement (22) nach einem der Ansprüche 1 bis 18, zum Bereitstellen von Hebekraft für einen Fahrkorb (14), wobei gemäß einem der Ansprüche 1 bis 18 das Zugelement (22) mit einer drehbaren Traktionsscheibe (24) zusammenwirkt.

20. Aufzugsystem nach Anspruch 19, mit einer getriebelosen Maschine zum Drehen der Traktionsscheibe (24).

21. Aufzugsystem nach Anspruch 19 oder 20, wobei das Zugelement (22) ein Element ist, an dem der Fahrkorb (14) und ein Gegengewicht (16) aufgehängt sind und das Hebekraft für den Fahrkorb bereitstellt.

**Revendications**

1. Elément de tension (22), qui coopère avec une poulie de traction rotative (24) pour système d'ascenseur, l'élément de tension (22) étant destiné à fournir une force de levage à une cabine (14) du système d'ascenseur (12) ; dans lequel l'élément de tension (22) comprend une pluralité de cordes de traction (26) espacées dans une couche de revêtement (28) formée d'un matériau non métallique ; et dans lequel l'élément de tension (22) présente un rapport de largeur w par rapport à une épaisseur t, supérieur à 1 ;
**caractérisé en ce que** les cordes (26) sont métalliques et chacune formée de cordons métalliques (27a ; 27b ; 37a ; 37b ; 200 ; 210) de telle sorte que la couche de revêtement (28) remplisse les espaces entre des cordons (27) adjacents.

2. Elément de tension (22), qui coopère avec la poulie de traction rotative (24) pour système d'ascenseur, selon la revendication 1, dans lequel les cordons (27a ; 27b ; 37a ; 37b ; 200 ; 210) sont formés chacun de fils de métal.

3. Elément de tension (22), qui coopère avec la poulie de traction rotative (24) pour système d'ascenseur, selon la revendication 2,
dans lequel les fils de métal ont un diamètre inférieur à 0,25 mm, de préférence un diamètre compris dans la plage allant de 0,10 mm à 0,20 mm environ.

4. Elément de tension (22), qui coopère avec la poulie de traction rotative (24) pour système d'ascenseur, selon l'une quelconque des revendications 1 à 3, dans lequel le diamètre de poulie (24) est inférieur ou égal à 100 mm.

5. Elément de tension (22), qui coopère avec la poulie de traction rotative (24) pour système d'ascenseur, selon l'une quelconque des revendications 1 à 4, dans lequel le diamètre de corde (26) est inférieur au diamètre de poulie (24) divisé par 40.

6. Elément de tension (22), qui coopère avec la poulie de traction rotative (24) pour système d'ascenseur, selon l'une quelconque des revendications 2 à 5, dans lequel les fils de métal ont un diamètre inférieur ou égal à 0,22 mm.

7. Elément de tension (22), qui coopère avec la poulie de traction rotative (24) pour système d'ascenseur, selon l'une quelconque des revendications 1 à 6, dans lequel chaque corde (26) est formée d'une pluralité de fils de manière à créer des espaces entre des fils adjacents, et dans lequel la couche de revêtement (28) remplit les espaces.

8. Elément de tension (22), qui coopère avec la poulie de traction rotative (24) pour système d'ascenseur, selon l'une quelconque des revendications 1 à 7, dans lequel les cordes (26) sont chacune formées d'un cordon central (27a ; 37a ; 200) et de six cordons extérieurs (27b ; 37b ; 210) torsadés autour du cordon central.

9. Elément de tension (22), qui coopère avec la poulie de traction rotative (24) pour système d'ascenseur, selon l'une quelconque des revendications 1 à 8, dans lequel les cordons (27a ; 27b ; 37a ; 37b ; 200 ; 210) sont chacun formés d'un fil central (31 ; 35 ; 202 ; 206) et de six fils (29 ; 204 ; 208) torsadés autour du fil central.

10. Elément de tension (22), qui coopère avec la poulie de traction rotative (24) pour système d'ascenseur, selon l'une quelconque des revendications 2 à 9, dans lequel les cordes (26) ont chacune le motif de torsade suivant :

     - dans un cordon central (27a ; 37a ; 200), les fils sont torsadés autour d'un fil central dans une première direction ;
     - dans chacun des cordons extérieurs (27b ; 37b ; 210) torsadés autour du cordon central, les fils sont torsadés autour d'un fil central dans une deuxième direction opposée ;
     - les cordons extérieurs sont torsadés autour du cordon central dans la première direction.

11. Elément de tension (22), qui coopère avec la poulie de traction rotative (24) pour système d'ascenseur, selon l'une quelconque des revendications 1 à 10, dans lequel la couche de revêtement (28) est en élastomère, formée de préférence d'un matériau polyuréthane.

12. Elément de tension (22), qui coopère avec la poulie de traction rotative (24) pour système d'ascenseur, selon l'une quelconque des revendications 1 à 11, dans lequel la couche de revêtement (28) est ignifugée.

13. Elément de tension (22), qui coopère avec la poulie de traction rotative (24) pour système d'ascenseur, selon l'une quelconque des revendications 1 à 12, dans lequel la surface de traction (50 ; 74 ; 102) de la poulie de traction (24) est formée d'un matériau qui optimise les forces de traction entre la poulie de traction (24) et l'élément de tension (22) et qui réduit au minimum l'usure de l'élément de tension, et dans lequel une telle surface de traction est fournie soit par une couche de revêtement fixée sur la poulie de traction, soit par une doublure de poulie (42 ; 68) disposée sur la poulie de traction, soit par un matériau avec lequel la poulie de traction est formée.

14. Elément de tension (22), qui coopère avec la poulie de traction rotative (24) pour système d'ascenseur, selon l'une quelconque des revendications 1 à 13, dans lequel la poulie de traction (24) comprend un canal circonférentiel qui guide l'élément de tension (22).

15. Elément de tension (22), qui coopère avec la poulie de traction rotative (24) pour système d'ascenseur, selon l'une quelconque des revendications 1 à 14, dans lequel plusieurs éléments de tension (22), placés côte à côte, coopèrent avec la poulie de traction (24).

16. Elément de tension (22), qui coopère avec la poulie de traction rotative (24) pour système d'ascenseur, selon l'une quelconque des revendications 1 à 15, dans lequel la poulie de traction (24) a une surface de traction incurvée, vue en coupe transversale axiale.

17. Elément de tension (22), qui coopère avec la poulie de traction rotative (24) pour système d'ascenseur, selon l'une quelconque des revendications 1 à 15, dans lequel l'élément de tension (22) a une surface d'accouplement profilée (94) dotée de plusieurs saillies s'étendant dans une direction longitudinale de l'élément de tension, et dans lequel la poulie de traction (24) a une surface de traction (102) qui est profilée selon une configuration complémentaire.

18. Elément de tension (22), qui coopère avec la poulie de traction rotative (24) pour système d'ascenseur, selon l'une quelconque des revendications 1 à 17, dans lequel chaque corde (26) est formée d'une pluralité de fils de manière à créer des espaces entre des fils adjacents, et dans lequel la couche de revêtement (28) remplit les espaces ;
dans lequel le diamètre de poulie (24) est inférieur ou égal à 100 mm ; et dans lequel le diamètre de corde (26) est inférieur au diamètre de poulie (24) divisé par 40.

19. Système d'ascenseur (12), comprenant un élément de tension (22), comme indiqué dans l'une quelconque des revendications 1 à 18, pour fournir une force de levage à une cabine (14), l'élément de tension (22) coopérant avec une poulie de traction rotative (24), comme indiqué dans l'une quelconque des revendications 1 à 18.

20. Système d'ascenseur selon la revendication 19, comprenant une machine sans engrenage pour faire tourner la poulie de traction (24).

21. Système d'ascenseur selon la revendication 19 ou 20, dans lequel l'élément de tension (22) est un élément qui suspend la cabine (14) et un contrepoids (16) et fournit une force de levage à la cabine.

FIG.1

## FIG.2

## FIG.3

FIG.4

FIG.5

FIG.9

FIG.6

EP 2 284 111 B1

FIG.7

FIG.8

**EP 2 284 111 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2162283 A
- US 1475250 A
- JP 9021084 A
- US 4022010 A, Gladdenbeck
- US 4624097 A, Wilcox
- US 4887422 A, Klees
- US 5566786 A, De Angelis
- US 5112933 A